# EUROPEAN PATENT SPECIFICATION

(11) **EP 0 607 627 B1**
(45) Date of publication and mention of the grant of the patent: **08.10.1997**
(21) Application number: 93121165.0
(22) Date of filing: 31.12.1993
(51) Int. Cl.: B01J 19/30, F28F 25/08

(54) **Packing element**
Füllkörper
Elément de garnissage

(30) Priority: 22.01.1993 US 7866; 27.01.1993 US 9525
(43) Date of publication of application: 27.07.1994
(73) Proprietor: NORTON CHEMICAL PROCESS PRODUCTS CORPORATION, Stow, Ohio 44224 (US)
(72) Inventor: Rukovena, Frank, Tallmagde, OH 44278-2556 (US); Dolan, Michael J., Brecksville, OH 44141 (US)
(74) Representative: Diehl, Hermann, Dr. Dipl.-Phys.

(56) References cited:
- WO-A-85/05287
- FR-A- 2 303 926
- GB-A- 139 880

## Description

This invention relates to packing elements.

Packing elements are used in reactors where liquids and gases are contacted so as to bring about a reaction, heat transfer, solution or dissolution operations by intimately contacting two flowing fluids. As a consequence they have shapes designed to maximize surface area while retaining dimensional stability such they do not collapse or become crushed during use. One means of achieving this end is to form the rings from cylindrical metal blanks, and providing internal structure by a variety of suitable techniques.

It is however desirable to have a structure that is easily produced to a standard design in large volumes. To satisfy these requirements the elements are often stamped out of a flat metal plate intended to be bent into a cylindrical shape with a plurality of flaps cut from the plate and bent inward towards the axis of the cylinder. This is the shape of the typical Pall ring and is described for example in U.S. Reissue Patent 27,217.

In order to retain the rigidity of such a ring it needs to be shaped from a relatively thick metal plate that will have be able to withstand the compressive forces encountered in use. Lacking such rigidity the rings will become compressed under the loading in the tower and more rings will be needed to fill the tower. In addition compressed rings do not have the same performance characteristics such that some predictability in operation is lost.

On the other hand it is desirable to reduce the thickness of this metal plate to save weight and to make the rings less expensive.

One solution has been to use a pair of bridging members to hold two cooperating semi-cylindrical pieces together as is described in U.S. Patent 4,197,264. This has a significant disadvantage in that the production process requires the combination of four separate components to make the final product.

It is therefore the object of the present invention to provide a packing element which avoids the above mentioned drawbacks. This object is solved by the packing element according to independent claim 1. Further advantageous features, aspects and details of the invention are evident from the dependent claims, the description and the drawings.

This invention relates to packing elements used in mass transfer and direct heat transfer applications and specifically to packing elements of a generally cylindrical shape, such as for example Pall rings, Lessing rings and the like.

The present invention provides a relatively rigid ring-type packing while allowing the use of thinner gauge metal. The ring structure is so designed that it can be made from a single strip of metal in a simple cutting and bending operation readily adapted to the use of mass production techniques.

The present invention provides a ring-type packing element formed by bending a flat metal strip into a generally cylindrical form wherein the end portions of the bent strip that contact one another when the ring is formed are provided with attachment means comprising cooperating tabs and slots which releasably engage to hold the ends together when the ends are overlapped and prevent any further relative movement of the end portions that would reduce the circumference of the ring.

The attachment "tabs and slots" means can have any convenient form. The "tabs" are understood to refer to flat metal strips of essentially the same thickness as the sheet from which the ring is formed and projecting from the sheet either as a flap cut from the metal of the strip and bent out of the plane of the sheet or as an extension at an end of the sheet with reduced length and width dimensions. The shape of the tab is not critical and can be round or rectangular or even dentate, with an engaging surface perpendicular to the length of the strip. The "slot" is a rectangular hole cut into the strip with a width slightly greater than the thickness of the tab and a length slightly greater than the greatest width of the tab. These dimensions are important since the engagement of the tab and the slot to hold the ends of the ring together must be releasable and yet prevent the further compression of the ring by contact of the strip at the base of the tab (where it is attached to the strip) with the opposed end of the strip in which the slot is formed.

A generally adaptable and advantageous attachment means comprises flaps bent inwardly towards the axis of the cylinder in the area of overlap of the ends of the strip and the cooperating slots formed by the cutting of the flaps, with one end bearing a flap projecting away from the said end and the opposed end having a flap in the area of overlap projecting towards the said end such that the flap projecting away from the end to which it is adjacent fits into the slot formed by the cutting of the flap the projects towards the end to which it is adjacent.

The flap can have any convenient shape such as triangular or rectangular but a simple, rectangular shape is often all that is required. Its length should be adequate to prevent unintended disengagement during use but not so long as to require extensive deformation of the cylinder to engage and disengage. The cooperating flaps are preferably located at the midpoint of the ends in the axial direction and generally one pair is enough. It is however possible to employ two or more cooperating pairs to give added stability.

A slight variation of the above design provides added security against unintended disengagement, particularly when the deforming pressure on the ring acts perpendicular to the diameter that passes through the attachment means. This variation places the slots slightly out of line with the cooperating flaps such that a slight twist needs to be applied to the strip to engage the flaps with the slots. Each flap is provided with a rabbeted portion part way along its length providing an engagement surface perpendicular to the length of the strip. With the flap in place within the slot, the tendency of the ring to straighten to remove the applied twist brings the engagement surface into contact with the strip at the end of the slot. This arrangement prevents unintentional disengagement of the slot and the flap as a result of compressive forces applied to the ring diameter that is perpendicular to the diameter in which the attachment means lies.

Another form of the attachment device is particularly effective with ring structures such as Lessing rings which generally comprise a ring structure having a flat extension member at one end of the strip from which the ring is formed projecting inwardly along an arc of the circular cross-section of the ring. This member is in effect an extension of the metal of the strip beyond the portion that defines the ring when the strip is bent to form the ring. The extension member resists any possible compression of the ring beyond the point at which the extension comes into contact with the inside surface of the ring. It also provides extra surface area when in use.

In the case of structures of this type, the slot is cut at the point at which the inwardly extending member is bent out of the ring shape. The cooperating tab is, in this embodiment, preferably an extension of the strip with dimensions that are adapted to permit insertion of the tab into the cooperating slot. The tab can be retained in the slot against forces tending to straighten the strip or compressive forces tending to flatten the ring acting at right angles to the diameter of the ring containing the attachment means by bending the tab towards the extension member, or by providing the same kind of off-set slot and rabbeted tab described above.

Rings of this type typically comprise at least two such attachment means but any convenient number can be used if desired.

Packing rings according to the invention have a rigidity that greatly exceeds that of the prior art rings without the attachment means. This rigidity can be further enhanced by providing the rings with peripheral flanges formed on the longitudinal edges of the metal strip such that, in the packing ring, the flanges will be formed around the top and bottom ends of the rings. The flanges preferably project in such a direction that they will not impede the bending of the strip into a ring shape. Thus in the finished ring the flanges project radially outward rather than inward. One of the flanges preferably terminates short of the ends of the strip such that the flanges do not contact when the attachment means are engaged but permit a limited degree of flexing of the ring before they come into contact. This contact limits the amount of deformation that can occur in normal use and renders the ring quite rigid. The flange however does not prevent disengagement of the preferred attachment means, (comprising flap and cooperating slot), which can be released by deforming the overlapped end inward, (but not the overlapping end), so as to disengage the flap from the cooperating slot.

The metal from which such rings are made is largely dictated by the environment in which it is designed to be used. Since this is often corrosive to some degree, it is conventional to use a resistant steel such as stainless steel, which is usually costly.

The gauge of the metal strip from which a packing ring such as a Pall or Lessing ring or similar structure is conventionally constructed is from about 0.65mm to 1.00mm and more typically from about 0.75mm to about 0.85mm. The improved packing ring structure of the present invention allows the use of metal strip of gauge down to about 0.10mm and preferred packing ring structures are constructed from metal strips of 0.15mm to 0.60mm gauge.

The conventional Pall ring structures are cylinders formed from a bent strip of metal and are provided with a plurality of inward flap projections cut from the bent strip and arcing inwardly toward the axis of the cylinder but terminating short of the axis. The number and size of these projections is not critical and is largely a function of the dimensions of the ring and the desired surface area. The provision of such projections is also a desirable feature of the packing rings of the present invention where these are in the Pall ring configuration.

Initial test data indicate that the rings according to the present invention can support up to 4639 kg/m² (950 lb/ft²) which is about equal to the supportable load for a ring of the same dimensions, made from steel strip that is 50% thicker, but which lacks the attachment means that characterizes the rings of the present invention. This means that deeper tower beds of packing can be employed without the need for intermediate support structures to avoid crushing the rings in the lower portions of the tower. In addition the use of thinner gauge steel leads to significant cost advantages for the structure of the present invention.

The attached drawings are described as follows:
Figure 1 is a longitudinal cross-section of a metal strip before it is bent into a cylindrical Pall ring shape showing the attachment means.
Figure 2 is side view of a Pall ring having the structure of the present invention.
Figure 3 is a cross-section of the ring shown in Figure 2 in along the line 3-3.
Figure 4 is a perspective view of a metal strip adapted to be formed into a Lessing ring structure showing the extension member already formed.
Figure 5 is cross-section of a Lessing ring structure at a point chosen to show the attachment means.

The invention will now be further described with specific reference to the embodiment illustrated in the Drawings which are for illustration only and are intended to imply no limitation on the essential scope of the invention.

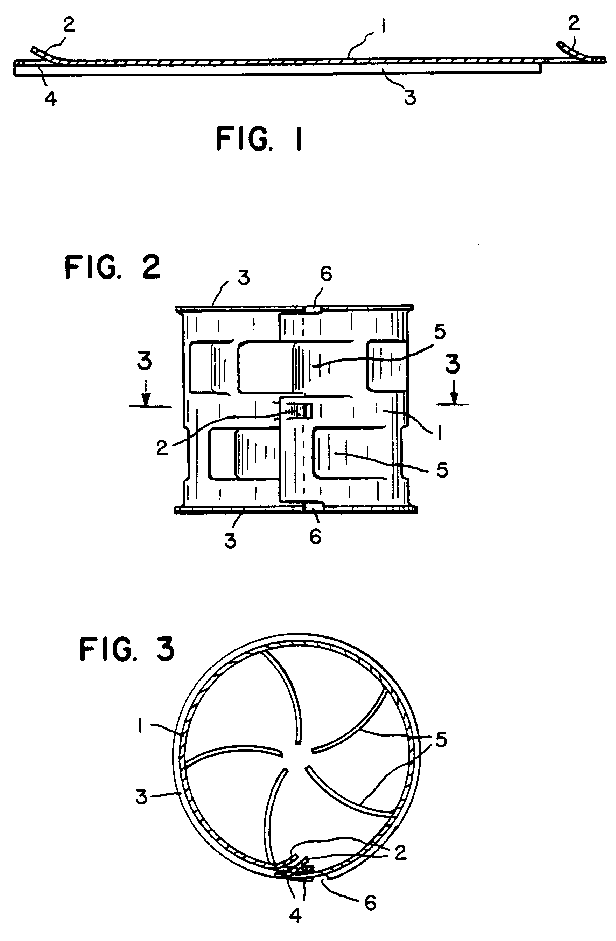

In Figures 1 to 3 of the Drawings, and referring initially to Figure 1, a metal strip, 1, is provided at each of its extremities with flaps, 2, punched out of the strip to leave slots, 4. The strip is also provided with flanges, 3, along the longitudinal edges terminating short of the end of the strip.

Figure 2 shows the strip of Figure 1 bent to form a cylindrical structure with one end overlapping the opposed end such that the flap on the overlapping end engages the slot on the end beneath the overlapping end and the tendency of the strip to straighten holds the ends in locking relationship with the flaps on opposed ends in contact.

Figure 2 also shows a flexing space, 6, between the flanges on opposed ends of the strip. This allows the ends to increase the degree of overlap slightly so as to permit engagement and disengagement of the flaps and slots that comprise the attachment means but resist any further deformation when the flange ends come into contact.

Figure 2 also shows the inwardly directed projections, 5, that are stamped from the sheet and are deformed inwardly towards the axis of the cylinder, usually after the cylinder has been formed. Typically there are from four to eight such projections arranged in the same plane perpendicular to the axis of the cylinder. The preferred embodiment shown in Figures 2 and 3 has two sets of five projections arranged in two planes, one above the plane of the attachment means and one below the plane of the attachment means.

Figure 3 is a cross-section along the plane 3-3 in Figure 2 and is designed to show in detail the interaction of the flaps 2, with the slots, 4, to form the attachment means.

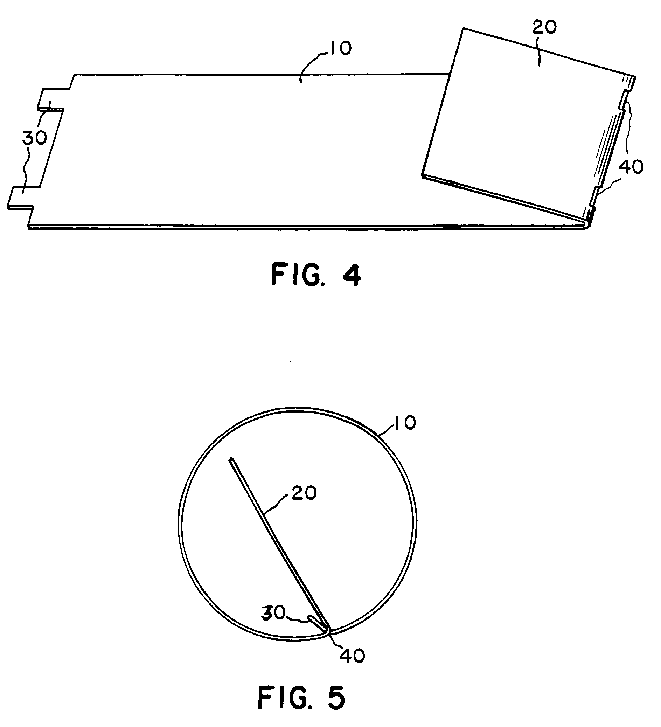

Referring now to Figure 4 and 5, the strip is to be formed into a Lessing ring structure rather than a Pall ring. The strip, 10, is provided with an extension member, 20, and slots, 40, cut at the angle formed when the extension member is bent away from the rest of the metal strip. The slots are positioned and of a suitable size to engage with tabs, 30, which project from the end of the strip remote from the end bearing the extension member and which, when engaged with the slots as shown in Figure 5, are adapted to be bent inwardly in the direction of the extension member.

The attachment means shown in the above drawings are presented for the purpose of illustration only and are not intended to imply any necessary limitation on the scope of the invention. Other equivalent structures could be devised and all such are understood to be within the purview of this invention.

## Claims

1. A packing element formed by bending a flat metal strip (1;10) into a generally cylindrical form wherein the end portions of the bent strip (1;10) that contact one another when a ring is formed are provided with attachment means comprising at least one cooperating tab (2;30) and slot (4;40) pair which releasably engages to hold the ends together when the ring is formed and limit any further relative movement of the end portions that would reduce the circumference of the ring, characterized in that
the tabs of the attachment means are provided by at least one pair of flaps (2) stamped out of the strip (1) and projecting from the plane of the strip (1) at essentially the same angle and in the same direction, with each flap (2) located adjacent an end of the strip (1) in the region of overlap when the element is formed, and the cooperating slots (4) are formed when the flaps (2) are produced, such that the flap (2) on one end provides the tab which engages with the cooperating slot (4) on the other end.

2. The packing element according to claim 1 having two or more attachment means.

3. The packing element according to one of the preceding claims in which the cylinder ends are provided with peripheral flanges (3) formed on the longitudinal edges of the strip (1).

4. The packing element according to one of the preceding claims in which a plurality of projections (5) are provided extending from the cylinder wall and generally towards the axis of the cylinder.

5. The packing element according to one of the preceding claims in which the element is stamped from a strip (1;10) of metal from 0.15 to 0.60 mm in thickness.

6. A packing element especially according to one of the preceding claims formed from a metal strip (10), said strip (10) having first and second end zones adjacent the ends thereof, the end zones being adapted to be bent into a generally cylindrical form to produce a ring-type packing element and being provided with attachment means comprising at least one cooperating tab (30) and slot (40) pair, wherein the first end zone includes an extension member (20) bent at an angle to the rest of the strip (10) such that, when the ring is formed, the member (20) projects within the cylinder, and wherein the slots (40) are provided in the first end zone in the vicinity of the bend and the cooperating tabs (30) are provided in the second end zone and project from the end of the strip (10) to engage with the slots (40) in the first end zone.

7. The packing element according to one of the preceding claims in which each slot (4;40) is offset from the cooperating tab (2;30) such that a slight twist of the strip (1;10) is needed to engage the tab (2;30) and slot (4;40) and in which each tab (2;30) is provided with an engagement surface formed by a rabbeted portion part way along the length of the tab (2;30) that is adapted to engage with the strip (1;10) at the end of the slot (4;40) when the strip (1;10) attempts to straighten and remove the twist.

## Patentansprüche

1. Packungselement, das durch Biegen eines flachen Metallstreifens (1; 10) in eine im allgemeinen zylindrische Form gebildet ist, wobei die Endbereiche des gebogenen Streifens (1; 10), die bei Bildung eines Rings in Kontakt kommen, mit Befestigungsmitteln versehen sind, welche mindestens ein zusammenwirkendes Laschen- (2; 30) und Schlitz- (4; 40)-Paar aufweisen, das lösbar in Eingriff kommt, um bei Bildung des Rings die Enden zusammenzuhalten und jegliche relative Bewegung der Endbereiche zu begrenzen, wodurch sich der Umfang des Rings verringern würde, dadurch gekennzeichnet, daß
die Laschen der Befestigungsmittel durch mindestens ein Paar Klappen (2) zur Verfügung gestellt sind, welche aus dem Streifen (1) herausgestanzt sind und von der Ebene des Streifens (1) im wesentlichen im gleichen Winkel und in derselben Richtung vorstehen, wobei sich jede Klappe (2) benachbart zu einem Ende des Streifens (1) im Bereich des Überlappens bei Bildung des Elements befindet und die zusammenwirkenden Schlitze (4) bei Erzeugung der Klappen (2) gebildet werden, so daß die Klappe (2) an einem Ende die Lasche zur Verfügung stellt, welche mit dem zusammenwirkenden Schlitz (4) am anderen Ende in Eingriff kommt.

2. Packungselement gemäß Anspruch 1 mit zwei oder mehreren Befestigungsmitteln.

3. Packungselement gemäß einem der vorhergehenden Ansprüche, bei dem die Zylinderenden mit Umfangsflanschen (3) versehen sind, welche an den Längskanten des Streifens (1) gebildet sind.

4. Packungselement gemäß einem der vorhergehenden Ansprüche, bei dem eine Mehrzahl von Vorsprüngen (5) zur Verfügung gestellt sind, welche sich von der Zylinderwand und im allgemeinen in Richtung auf die Achse des Zylinders erstrecken.

5. Packungselement gemäß einem der vorhergehenden Ansprüche, bei dem das Element aus einem Streifen (1; 10) aus Metall mit einer Dicke von 0,15 bis 0,60 mm gestanzt ist.

6. Packungselement, insbesondere gemäß einem der vorhergehenden Ansprüche, das aus einem Metallstreifen (10) gebildet ist, wobei der Metallstreifen (10) eine erste und eine zweite Endzone benachbart zu den Enden hiervon aufweist, wobei die Endzonen darauf ausgerichtet sind, in eine im allgemeinen zylindrische Form gebogen zu sein, um ein ringartiges Packungselement herzustellen, und mit Befestigungsmitteln versehen sind, welche mindestens ein zusammenwirkendes Laschen- (30) und Schlitz- (40)-Paar aufweisen, wobei die erste Endzone ein Erweiterungselement (20) aufweist, welches in einem Winkel zum Rest des Streifens (10) derart gebogen ist, daß bei Bildung des Rings das Element (20) innerhalb des Zylinders vorsteht, und wobei die Schlitze (40) in der ersten Endzone in der Nähe der Biegung zur Verfügung gestellt und die zusammenwirkenden Laschen (30) in der zweiten Endzone zur Verfügung gestellt sind und vom Ende des Streifens (10) vorstehen, um mit den Schlitzen (40) in der ersten Endzone in Eingriff zu kommen.

7. Packungselement gemäß einem der vorhergehenden Ansprüche, bei dem jeder Schlitz (4; 40) derart von der zusammenwirkenden Lasche (2; 30) versetzt ist, daß eine geringfügige Verdrehung des Streifens (1; 10) nötig ist, um die Lasche (2; 30) und den Schlitz (4; 40) in Eingriff zu bringen, und wobei jede Lasche (2; 30) mit einer Eingriffsfläche versehen ist, welche durch einen gefalzten Bereichsteil entlang der Länge der Lasche (2; 30) gebildet ist, welche darauf ausgerichtet ist, mit dem Streifen (1; 10) am Ende des Schlitzes (4; 40) in Eingriff zu kommen, wenn durch den Streifen (1; 10) ein versuchtes Geraderichten und Entfernen der Verdrehung erfolgt.

## Revendications

1. Elément de garnissage formé en courbant une bande de métal plate (1 ; 10) en une forme généralement cylindrique dans laquelle les portions d'extrémité de la bande courbée (1 ; 10) qui sont en contact l'une avec l'autre lorsqu'un anneau est formé sont pourvues de moyens de fixation comprenant au moins une paire de pattes (2 ; 30) et de fentes (4 ; 40) appariées qui sont en prise libérable pour maintenir les extrémités ensemble lorsque l'anneau est formé et limiter tout déplacement relatif supplémentaire des portions d'extrémité qui réduirait la circonférence de l'anneau, caractérisé en ce que
les pattes des moyens de fixation sont créées par au moins une paire de volets (2) découpés à l'emporte-pièce dans la bande (1) et se projetant depuis le plan de la bande (1), essentiellement selon le même angle et dans la même direction, chacun des volets (2) étant disposé au voisinage d'une extrémité de la bande (1) se trouvant dans la région de chevauchement lorsque l'élément est formé, et en ce que les fentes (4) appariées sont formées lorsque les volets (2) sont produits, de sorte que le volet (2) se trouvant sur une extrémité crée la patte qui vient en prise avec la fente appariée (4) prévue sur l'autre extrémité.

2. Elément de garnissage selon la revendication 1, comprenant deux moyens de fixation ou davantage.

3. Elément de garnissage selon l'une des revendications précédentes, dans lequel les extrémités du cylindre sont pourvues de brides périphériques (3) formées sur les bords longitudinaux de la bande (1).

4. Elément de garnissage selon l'une des revendications précédentes, dans lequel une pluralité de protubérances (5) sont prévues, lesquelles s'étendent depuis la paroi du cylindre et généralement en direction de l'axe du cylindre.

5. Elément de garnissage selon l'une des revendications précédentes, dans lequel l'élément est découpé à l'emporte-pièce dans une bande (1 ; 10) de métal ayant une épaisseur de 0,15 à 0,60 mm.

6. Elément de garnissage, en particulier selon l'une des revendications précédentes, formé à partir d'une bande de métal (10), ladite bande (10) présentant de première et seconde zones d'extrémité au voisinage de ses extrémités, les zones d'extrémité étant adaptées à être courbées en une forme généralement cylindrique pour produire un élément de garnissage de type annulaire et étant pourvues de moyens de fixation comprenant au moins une paire de pattes (30) et de fentes (40) appariées, élément dans lequel la première zone d'extrémité comprend un élément formant prolongement (20) qui est courbé pour former un angle avec le reste de la bande (10), de sorte que, lorsque l'anneau est formé, l'élément (20) se projette à l'intérieur du cylindre, et dans lequel les fentes (40) sont prévues dans la première zone d'extrémité, au voisinage de la courbure, et les pattes appariées (30) sont prévues dans la seconde zone d'extrémité et se projettent depuis l'extrémité de la bande (10) pour venir en prise avec les fentes (40) ménagées dans la première zone d'extrémité.

7. Elément de garnissage selon l'une des revendications précédentes, dans lequel chaque fente (4 ; 40) est décalée par rapport à la patte appariée (2 ; 30), de sorte qu'une légère torsion de la bande (1 ; 10) est nécessaire pour que la patte (2 ; 30) et la fente (4 ; 40) viennent en prise, et dans lequel chaque patte (2 ; 30) présente une surface de mise en prise, formée par une portion rainurée prévue sur une partie de la longueur de la patte (2 ; 30), qui est adaptée à venir en prise avec la bande (1 ; 10), à l'extrémité de la fente (4 ; 40), lorsque la bande (1 ; 10) a tendance à se redresser et à éliminer la torsion.
